(19) Europäisches Patentamt
European Patent Office
Office européen des brevets

(11) Publication number: 0 122 743 B1

(12) EUROPEAN PATENT SPECIFICATION

(45) Date of publication of patent specification: 05.12.90

(51) Int. Cl.$^5$: C 08 G 18/61, C 08 L 75/04

(21) Application number: 84302073.6

(22) Date of filing: 27.03.84

# (54) Liquid organic polyisocyanate composition for use in reaction injection molding in presence of siloxane mold release agent.

(30) Priority: 13.04.83 US 484538
18.04.83 US 486269
23.05.83 US 497035
23.05.83 US 497036

(43) Date of publication of application:
24.10.84 Bulletin 84/43

(45) Publication of the grant of the patent:
05.12.90 Bulletin 90/49

(84) Designated Contracting States:
AT BE CH DE FR GB IT LI LU NL SE

(56) References cited:
EP-A-0 092 700
EP-A-0 103 367
FR-A-2 311 793
US-A-3 706 681
US-A-4 076 695

(73) Proprietor: ICI AMERICAS INC.
Concord Pike & New Murphy Road
Wilmington Delaware 19897 (US)

(72) Inventor: Robertson, John Russell
59, Paul Lane
Glenn Mills Pennsylvania 19342 (US)

(74) Representative: Beton, John Lonsdale et al
Imperial Chemical Industries PLC Legal
Department: Patents PO Box 6
Welwyn Garden City Herts, AL7 1HD (GB)

EP 0 122 743 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention is directed to a liquid organic polyisocyanate composition for use in a process for manufacturing shaped polymer components by a reaction injection process (RIM) wherein a liquid stream of polyisocyanate is impingement mixed with at least one stream containing reactants selected from polyols, polyamines and catalysts.

The composition is especially useful in manufacturing shaped polymer components by a reaction injection molding process (RIM) wherein a liquid stream of the polyisocyanate composition is impingement mixed with at least one other stream containing active hydrogen containing organic liquids, catalysts, fillers into a metal mold to cure.

Recent developments in the chemistry of the polymer systems have resulted in urethane and urethane-urea polymers which are sufficiently cured to be demolded within 20—30 seconds after injection. RIM equipment has improved so that the mechanics of opening and closing the mold also require only 30—40 seconds. Urethane polymers are excellent adhesives and bond tenaciously to metal so it is necessary to apply a release agent to the mold surface so that the parts can be easily and quickly removed without damage or distortion. The molds are complex and must be completely and uniformly covered, usually by spraying a solution or emulsion of soap or wax. This procedure requires 30—60 seconds and must be done at least after every 3—5 parts and more often after each part, thus increasing the part to part cycle time by as much as 50%. In addition, this constant spraying and respraying causes excessive mold release to build up on some parts of the mold surface causing loss of gloss of the molded part. This means that periodically the mold must be wiped off, to remove excess release agent and, about once every 150 to 200 parts, must be completely cleaned, and reprepared for molding. This can add another 10—20% to the time required to mold each part. Furthermore, the external release agent is, obviously, removed from the mold because it adheres to the molded part and must be washed off the part before it is painted, thus providing a possible source for part quality problems.

Clearly, the reduction of the need to apply external release agent could reduce the present cycle time by 50% or more, thus increasing productivity and reducing unit cost. In addition, it would reduce quality problems by reducing surface blemishes resulting from build up of release agent on the mold and by reducing paint rejects by reducing the amount of external release agent left on the surface on each part.

Another improvement which has been disclosed is the use of internal mold release agents like polysiloxane mold release agents, see FR—A—2311793 and EP—A—103367.

Such polysiloxane mold release agents are somewhat reactive with polyisocyanate and are therefore, if it is desired to add these agents to the polyisocyanate stream, to be added to this polyisocyanate stream shortly before it is mixed with the other active ingredients. Otherwise gelation occurs within a few hours and after a period of about 24 hours the isocyanate stream can no longer be metered due to complete gelation.

Surprisingly, it has been found that such premature gelation can be inhibited by incorporating a silicone surfactant.

Consequently, the present invention is concerned with a liquid organic polyisocyanate composition for use in a process for manufacturing shaped polymer components by a reaction injection process (RIM) wherein a liquid stream of polyisocyanate is impingement mixed with at least one stream containing reactants selected from polyols, polyamines and catalysts, characterized in that said polyisocyanate composition has dispersed therein:—

from 1—15 percent by weight of a polysiloxane mold release agent which consists essentially of 0.5—20 mol percent of

$$R_aR'_bSiO_{[4-(a+b)]/2} \text{ units}$$

and from 80—99.5 mol percent of

$$R''_cSiO_{(4-c)/2} \text{ units,}$$

where R is an isocyanate reactive organic radical selected from alcohols, phenols, thiols, primary or secondary aromatic amines, which contain no oxygen, and not more than one nitrogen, atoms attached directly to, in conjunction with, or incorporated within, the aromatic ring nucleus, and secondary aliphatic amines wherein at least one of the alkyl carbon atoms, bonded directly to the nitrogen atom, is not a primary atom and carboxylic acids, a has an average value of from 1—3,

R' and R'' are both non-isocyanate reactive organic radicals,

b has an average value of 0—2,

a+b is from 1—3,

and c has an average value of from 1—3,

whereas the ratio of the total molecular weight to the total number of isocyanate reactive functional groups in the molecule ranges from 100—3500 the combined formula weights of all isocyanate reactive organic radicals, R do not exceed 40% of the total molecular weight of said polysiloxane mold release agent,

the combined formula weights of all non-isocyanate reactive radicals, R'+R'' together do not exceed 40% of the total molecular weight of said polysiloxane mold release additive,

the combined formula weights of all the organic radicals R+R'+R'' in the molecule together do not exceed 60% of the total molecular weight of the molecule,

said polysiloxane mold release agent contains an average of at least two isocyanate reactive functional groups per molecule,

at least two of the isocyanate reactive functional groups in each molecule are located on separate organic radicals, R, attached independently to different silicon atoms in said polysiloxane the molecular weight of said polysiloxane mold release agent ranges from 1000 and 30,000, and whereas said polysiloxane mold release agent is substantially insoluble in said liquid polyisocyanate,

and from 1—25 percent based on the weight of said polysiloxane mold release agent of a liquid silicone surfactant which is substantially free of isocyanate reactive groups.

While the internal mold release agent dispersions of this invention can provide easy removal from an untreated mold surface at least for several parts, more efficient operation can be achieved by treating the mold surface with a standard release agent first and then again after each batch of about 10 to about 50 parts.

In the operation of a reaction injection molding process multiple streams of reactants are metered into a mixer and immediately injected into a mold. For example, a blend of isocyanate reactive ingredient such as polyols, polyolamines, polyamines including catalysts, fillers, dyes; coloring agents are metered as one stream and impingement mixed with the polyisocyanate composition as a second stream and are thereafter injected into the mold for curing.

In these mold release agents the hydroxy, mercapto, or amino organic R radicals have preferably a molecular weight in the range of 100—400 can be attached to the silicon atom directly to carbon or through oxygen, nitrogen or sulfur carbon bonds. Particularly preferred R radicals are those of the formula HO—R'''—, $H_2N$—R'''—, $HNR_2'''$, HS—R'''—, wherein R''' is a divalent linking group composed of carbon and hydrogen; carbon, hydrogen and oxygen; carbon, hydrogen and sulfur; carbon, hydrogen and nitrogen; or carbon, hydrogen, oxygen and nitrogen. Specific examples of R''' include the methylene, ethylene, propylene, hexa-methylene, decamethylene, —$CH_2CH(CH_3)$—$CH_2$—, phenylene, butyl phenylene, naphthylene,

$$—CH_2CH_2SCH_2CH_2—, —CH_2CH_2OCH_2—, —CH_2CH_2—CH_2—O(CH_2—CHR'O)_n—,$$

where n is 0—5 where R' is described as above or H, a preferred R group is

$$—CH_2CH_2CH_2O(CH_2CH(CH_3)O)_nH$$

where n=1—5 having an hydroxyl equivalent weight of 500—2000. It is preferred that the R''' linking group contains from 3—10 atoms in addition to hydrogen atoms. There can be from 1—33 functional R radicals, preferably 3—10, and from 1—3 attached to a silicon atom.

As indicated above, the R' radical can be any hydro-carbon or substituted organic radical. Illustrative of the R' radicals that can be present are alkyl radicals such as the methyl, ethyl, propyl, butyl amyl, hexyl, octyl, decyl, dodecyl, and octadecyl, and myristyl radicals, alkenyl radicals such as the vinyl, allyl, and hexenyl radicals; cycloalkyl radicals such as the cyclobutyl and cyclohexyl radicals; aryl radicals such as the phenyl, and naphthyl radicals; aralkyl radicals such as the benzyl and 2-phenylethyl radicals; alkaryl radicals such as the tolyl, xylyl and mesityl radicals; the corresponding halohydrocarbon radicals such as 3-chloropropyl, 4-bromobutyl, 3,3,3-tri-fluoropropyl, chlorocyclohexyl, bromophenyl, chlorophenyl, alpha, alpha, alphatrifluorotolyl and the dichloroxenyl radicals; the corresponding cyanohydrocarbon radicals such as 2-cyanoethyl, 3-cyanopropyl and cyanophenyl radicals; the corresponding radicals such as ether and ester hydrocarbon radicals such as —$(CH_2)_3OC_2H_5$, —$(CH_2)_3OCH_3$, —$(CH_2)_3COOC_2H_5$, and —$(CH_2)_3COOCH_3$, the corresponding thioether and thioester hydrocarbon radicals such as —$(CH_2)_3SC_2H_5$ and —$(CH_2)_3COSCH_3$; and nitrohydrocarbon radicals such as the nitrophenyl and 3-nitropropyl radicals. It is preferred that the R' radical be an organic radical containing from 1 to 10 atoms. In the most preferred embodiment of this invention at least 90 percent of all the R' radicals are methyl radicals. There can be an average of from 0 to 2 R' radicals attached to the silicon atom, i.e., b has an average of from 0 to 2 in the above formula.

The R'' radical in the functional isocyanate reactive siloxanes of this invention can also be any hydrocarbon or substituted hydrocarbon radical. The illustrative examples given with respect to R' above are equally applicable here and are not repeated for the sake of brevity. Likewise, the preferences set forth for R' above also apply to the R'' radical. There can be from 0 to 3 R'' radicals, on the average per silicon atom, i.e., c has an average value of from 1 to 3 in the above formula.

These polysiloxane mold release agents are made by well known techniques and are usually formed by grafting an olefin containing organic modifying group or polyoxyalkylene oxide onto a "methylhydrogen siloxane" modified polydimethylsiloxane using a platinum catalyzed hydrolisation reaction.

The polysiloxanes can be either solid or liquid in form and are required to be substantially insoluble in isocyanate liquid under RIM operating conditions. While the viscosity of the liquid siloxane can vary over a

wide range, for example from 1 to 100,000 mPa · s., it is generally preferred that the viscosity be in the range of from 50 to 100 mPa.s. Molecular weight can vary from 1000 to 30,000, preferably 2000—20,000 and most preferred 4000—8000.

The formulations of the invention include from 1—15 percent by weight of a polysiloxane such as those included in the above described definition and specifically but not limited to those in the following list having $R_aR'_bSiO_{[4-(a+b)]/2}$ units and $R''_cSiO_{[4-c]/2}$ units. In said list the value listed for (d) is the equivalent weight, (e) is the combined formula weights or reactive radicals R expressed as percent of the molecular weight, (f) is the combined formula weights of non-isocyanate reactive groups R'+R'' expressed as percent of the molecular weight.

"Polysiloxane I" is a hydroxy functional polysiloxane polyether copolymer internal mold release agent having the approximate formula:

$$(CH_3)_3SiO[Si(CH_3)_2O]_{66}[Si(CH_3)(C_3H_6O(CH_2CH(CH_3)O)_{2.5}H)O]_3Si(CH_3)_3$$

having a molecular weight of about 6000, a hydroxy equivalent weight (d) of 2000, (e) is 13%, (f) is 35%, and a viscosity of 160 mPa.s.

"Polysiloxane II" is a hydroxy functional thioether copolymer internal mold release agent having the speculative formula:

$$[HOCH_2CH_2SCH_2CH_2CH_2(CH_3)_2SiO][Si(CH_3)_2O]_{65}[Si(CH_3)_2CH_2CH_2CH_2SCH_2CH_2OH]$$

having a hydroxy equivalent weight (d) of 2750, a molecular weight of 5500, a value for (e) of 4.7%, (f) is 37% and a viscosity of about 55 mPa.s.

"Polysiloxane III" has a general formula as follows:

$$(CH_3)_3SiO[Si(CH_3)_2O]_{134}[Si(CH_3)(C_3H_6OC_2H_3(OH)CH_2OH)—O]_{16}Si(CH_3)_3$$

a molecular weight 13,136, (d) equivalent weight of 411, (e) is 16% and (f) is 33%.

"Polysiloxane IV" has a general formula as follows:

$$(CH_3)_3SiO[Si(CH_3)_2O]_{63}[Si(CH_3)(C_3H_6OC_2H_3(OH)CH_2OH)—O]_7Si(CH_3)_3$$

a molecular weight 6,154, (d) equivalent weight 440, (e) is 15%, and (f) is 34%.

"Polysiloxane V" has a general formula:

$$(CH_3)_3SiO[Si(CH_3)_2O]_{65}[Si(CH_3)(C_3H_6OC_2H_3(OH)CH_2OH)—O]_5Si(CH_3)_3$$

a molecular weight of 6068, (d) equivalent weight 607, (e) is 11%, and (f) is 35%.

"Polysiloxane VI" has a general formula:

$$(CH_3)_3SiO[Si(CH_3)_2O]_{56}[Si(CH_3)C_3H_6O(C_2H_3(OH)CH_2OH)O]_{14}Si(CH_3)_3$$

a molecular weight of 6980, (d) equivalent weight 249, (e) is 26%, and (f) is 28%.

"Polysiloxane VII" has a general formula:

$$CH_3CH(OH)CH_2OC_3H_6Si(CH_3)_2O[Si(CH_3)_2O]_{89}Si(CH_3)_2C_3H_6OC_2H_4(OH)CH_3$$

a molecular weight of 6962, (d) an equivalent weight of 3481, (e) is 3.7%, and (f) is 39%.

"Polysiloxane VIII" has a general formula:

$$(CH_3)_3SiO[Si(CH_3)_2O]_{66}[(CH_3)Si(C_4H_8—PH—NH(C_3H_7)O]_3Si(CH_3)_3$$

where PH=phenylene

a molecular weight of 5782, and equivalent weight (d) of 3481, (e) is 9.9% and (f) is 37%.

"Polysiloxane IX" has a general formula:

$$(CH_3)_3SiO[Si(CH_3)_2O]_{55}[HOCH_2CHOHCHOHCH(CH_2OH)CH(CH_2OH)Si(CH_3)O]_{14}Si(CH_3)_3$$

a molecular weight of 7550, an equivalent weight (d) of 108, (e) is 33% and (f) is 26%.

"Polysiloxane X" has a general formula:

$$(CH_3)_3SiO[Si(CH_3)_2O]_{61}[(CH_3)Si(C_3H_6OCH_2CH(OH)CH_2OH)O]_9Si(CH_3)_3$$

a molecular weight of 6390, an equivalent weight (d) of 355, (e) is 19% and (f) is 32%.

"Polysiloxane XI" has a general formula:

$$(CH_3)_3SiO[Si(CH_3)_2O]_{82}[Si(CH_3)(C_3H_6O(C_2H_3CH_3O)_2C_2H_4CO_2H)O]_3Si(CH_3)_3$$

The exact polyol or polyamine or mixture thereof employed for making the shaped polymer components depends upon the end use of the resin product to be produced. For example, when polyurethane foams are prepared the molecular weight or the hydroxyl number is selected to result in flexible or semiflexible foams. The polyols is this instance preferably possess a hydroxyl number of from about 50 to about 150 for semiflexible foams and from about 20 to about 70 for flexible foams. As a further example, for elastomer application would generally be desirably to utilize high molecular weight polyols having relatively low hydroxyl numbers for example 20—50 or so. Such limits are not intended to be restrictive but are merely illustrative of the large number of possible combinations of the polyols or polyols used. The relatively high molecular weight hydroxyl-containing polyols which can be employed herein are those polyether and polyester polyols which have an average hydroxyl functionality of from 2 to 6, preferably from 2 to 4 and most preferably from 2 to 3 and an average hydroxyl equivalent weight of from 500 to 5000, preferably from 1000 to 3000 and most preferably from 1500 to 2500 including mixtures thereof.

Suitable relatively high molecular weight polyether polyols which can be employed herein include those which are prepared by reacting an alkylene oxide, halogen substituted or aromatic substituted alkylene oxide or mixtures thereof with an active hydrogen-containing initiator compound.

Suitable oxides include, for example, ethylene oxide, propylene oxide, 1,2-butylene oxide, 2,3-butylene oxide, styrene oxide, epichlorohydrin, epibromohydrin, mixtures thereof and the like.

Suitable initiator compounds include water, ethylene glycol, propylene glycol, butanediol, hexanediol, glycerine, trimethylol propane, pentaerythritol, hexanetriol, sorbitol, sucrose, hydroquinone, resorcinol, catechol, bisphenols, novolac resins, phosphoric acid, mixtures thereof and the like.

Also suitable as initiators for the relatively high molecular weight polyols include, for example, ammonia, ethylenediamine, diaminopropanes, diaminobutanes, diaminopentanes, diaminohexanes, diethylenetriamine, triethylenetetramine, tetraethylenepentamine, pentaethylenehexamine, ethanolamine, aminoethylethanolamine, aniline, 2,4-toluenediamine, 2,6-toluenediamine, diaminodiphenyloxide (oxydianiline), 2,4'-diaminodiphenylmethane, 4,4'-diaminodiphenylmethane, 1,3-phenylenediamine, 1,4-phenylenediamine, naphthylene-1,5-diamine, triphenylmethane-4,4',4''-triamine, 4,4'-di(methylamino)-diphenylmethane, 1-methyl-2-methylamino-4-aminobenzene, 1,3-diethyl-2,4-diaminobenzene, 2,4-diaminomesitylene, 1-methyl-3,5-diethyl-2,4-diaminobenzene, 1-methyl-3,5-diethyl-2,6-diaminobenzene, 1,3,5-triethyl-2,6-diaminobenzene, 3,5,3',5'-tetraethyl-4,4'-diaminodiphenylmethane and amin aldehyde condensation products such as the polyphenylpolymethylene polyamines produced from aniline and formaldehyde, mixtures thereof and the like.

Suitable polyester polyols which may be employed herein include, for example, those prepared by reacting a polycarboxylic acid or anhydride thereof with a polyhydric alcohol. The polycarboxylic acids may be aliphatic, cycloaliphatic, aromatic and/or heterocyclic and may be substituted (e.g., with halogen atoms) and/or unsaturated. Example of carboxylic acids of this kind include succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride; endomethylene tetrahydrophthalic acid anhydride; glutaric acid anhydride; maleic acid; maleic acid anhydride; fumaric acid; dimeric and trimeric fatty acids; such as oleic acid, which may be in admixture with monomeric fatty acids, terephthalic acid dimethyl ester; terephthalic acid bisglycol ester and the like. Mixtures of such acids or anhydrides may also be employed.

Examples of suitable polyhydric alcohols include ethylene glycol, 1,2-propylene glycol; 1,3-propylene glycol; 1,4-, 1,2- and 2,3-butylene glycol; 1,6-hexane diol, 1,8-octane diol; neopentyl glycol; cyclohexane dimethanol (1,4-bis-hydroxy-methyl cyclohexane) 2-methyl-1,3-propane diol; glycerol; tri-methylol propane; 1,2,6-hexane triol; 1,2,4-butane triol; tri-methylol ethane; pentaerythritol; quinitol; mannitol; sorbitol; methyl glycoside; diethylene glycol; triethylene glycol; tetraethylene glycol; polyethylene glycol; dipropylene glycol; polypropylene glycols; dibutylene glycol; polybutylene glycols and the like. The polyesters may contain some terminal carboxyl groups. It is also possible to use polyesters of lactones such as caprolactone, or hydroxy carboxylic acids such as hydroxy caproic acid.

Other polyols which can be employed herein include polymer-containing polyols such as, for example, those disclosed in U.S. Patent Nos. RE 29,118 (Stamberger), RE 28,715 (Stamberger), RE 29,014 (Pizzini et al.) and 3,869,413 (Blankenship et al.).

In addition to those above-described polyols are the polymer/polyol blends which are normally liquid stable polymer/polyol compositions formed by polymerizing in the presence of a free radical catalyst from about 10 to about 50 weight percent of a mixture of an ethylenically unsaturated monomer such as acrylonitrile or styrene of mixtures thereof dissolved or dispersed in a polyol mixture.

Amine equivalents of the above described polyols and blends therewith are used in making polyurea and polyureaurethanes. Polyoxyalkylene polyamines and cyano-alkylated polyoxyalkylene polyamines having a molecular weight of 1000—10,000 with a preferred range of 2000 to 7000 which have the general formula:

$$H_2NCH_2\text{—}CXH(OCH_2CHX)_pNH_2$$

where X is H or alkyl group having 1—18 carbon atoms and where p is a number of about 20—200; and triamines of poly-alkoxylated trimethylol propane having the general formula:

$$CH_3CH_2C[CH_2(OCH_2—CXH)_9NH_2]_3$$

where 9 is an average of 10—100 are also useful materials for the blends of the invention. These amines are prepared according to the procedure outlined in a U.S. Patent No. 3,666,788. These materials have the general formula:

$$Q[(OCH_2CXX)_rOCHYCHZNHA]_s$$

where Q is the nucleus of an oxyalkylation-susceptible aliphatic polyhydric alcohol containing 2—20 carbon atoms and 2—6 hydroxyl groups, A is hydrogen or a cyano or lower alkyl radical having one or two carbon atoms between the nitrogen and cyano radical provided at least one A is a cyano-lower-alkyl radical, Z is an alkyl group containing 1—18 carbon atoms, $_r$ has an average value 10—100 and s is 2—6, Q is saturated and consists of carbon and hydrogen. The methyl and ethyl alkyl groups of A may be substituted by lower alkyl groups.

The blends may include lower molecular weight polyols and polyamines than those listed above. Polyols and polyamines useful in the process of the invention can be demonstrated by but not limited to those in the following list some of which are well known in the art and are readily commercially available:

"Polyol A" is a polypropylene oxide triol (the designation of this and subsequent polyols as a "triol" or "diol" represents the nominal functionality based solely on the starter used; the actual functionality will be somewhat less) having about 10 percent external ethylene oxide content, a hydroxyl number of about 48 and a number average molecular weight of about 3300.

"Polyol B" is a polypropylene oxide diol having about 15 percent external ethylene oxide content, a hydroxyl number of about 38 and a number average molecular weight of about 2800.

"Polyol C" is a polypropylene oxide triol having about 14 percent internal ethylene oxide content, a hydroxyl number of about 47 and a number average molecular weight of about 3300.

"Polyol D" is a polyol produced from propylene oxide, sorbitol and glycerine having an external ethylene oxide content of about 15 percent, a hydroxyl number of about 28 and a number average molecular weight of about 7100.

"Polyol E" is a polypropylene oxide triol having an external ethylene oxide content of about 15 percent, a hydroxyl number of about 27 and a number average molecular weight of about 4400.

"Polyol F" is a polypropylene oxide triol having an internal ethylene oxide content of about 14 percent, a hydroxyl number of about 24 and a number average molecular weight of about 5000.

"Polyol G" is a polypropylene oxide triol having an internal ethylene oxide content of about 8 percent, a hydroxyl number about 56 and a number average molecular weight of about 2800.

"Polyol H" is a polypropylene oxide triol having an internal ethylene oxide content of about 16.5 percent, a hydroxyl number of about 35 and a number average molecular weight of about 4000.

"Polyol I" is a polypropylene oxide triol having an external ethylene oxide content of about 17 percent, a hydroxyl number of about 39 and a number average molecular weight of about 4200.

"Polyol J" is a polypropylene oxide triol having an internal ethylene oxide content of about 10 percent, a hydroxyl number of about 50 and a number average molecular weight of about 3100.

"Polyol K" is a polypropylene oxide triol having an external ethylene oxide content of about 15 percent, a hydroxyl number of about 35 and a number average molecular weight of about 4000.

"Polyol L" is a polypropylene oxide triol having an external ethylene oxide cap with a 6000 M.W. and a hydroxyl value of 27.4 mg KOH/gm grafted to 20% by weight polyacrylonitrile polymer commercially available as Niax D-440 (Union Carbide).

"Polyol M" is a polypropylene oxide/polyethylene oxide triol having a molecular weight of 10,000 and a hydroxyl number of 17.

"Polyol N" is a polypropylene oxide/polyethylene oxide triol having a molecular weight of 1000 and a hydroxyl number of 150.

"Polyamine O" is a polypropylene oxide/polyethylene oxide triamine of molecular weight 3000 and is commercially available as Jeffamine T3000 (Jefferson Chem).

"Polyamine P" is a 5000 molecular weight polypropylene oxide/polyethylene oxide polyamine having total amine content of 0.48 mg/gram, .58 mg/gram of primary amine and commercially available Jeffamine T5000.

The names Niax, Jeffamine, Dabco, Cinncinati Milacron, Rubinate, Freon, Rimlease and Thanate as used in the above list or in the examples may be registered trade marks in certain states.

The polyisocyanate compositions remain substantially ungelled and fluid up to 25°C. They are preferably made by adding the silicone surfactant and isocyanate reactive polysiloxane mold release agent to the liquid polyisocyanate employing high shear mixing equipment at room temperature. If ingredients are added separately it is preferred to add the surfactant to the polyisocyanate liquid before adding the isocyanate reactive polysiloxane mold release agent. Alternatively, the surfactant and polysiloxane mold release agent may be preblended before mixing with the isocyanate. In most instances stable liquid dispersions are obtained from blends which contain 1—15 percent by weight of the functional polysiloxane

compound and based upon the weight of the polysiloxane mold release agent from 2—25 and preferably from 5—15 percent by weight of a silicone surfactant. Since these dispersions are not stable without the silicone surfactant it is theorized that the surfactant acts as an inhibitor agent for the isocyanate reactive groups in the polysiloxane mold release agent and that the surfactant silicone must be present in amounts sufficient to at least coat the mold release agent to inhibit reaction with the isocyanate at temperatures up to 25°C. It is important to mix the components with high shear mixing equipment especially since the polysiloxane mold release agent is substantially incompatible or insoluble in the polyisocyanate liquid.

The organic polyisocyanates that are useful in producing polyurethane products in accordance with this invention are organic compounds that contain at least two isocyanate groups. Such compounds are well known in the art. The preferred polyisocyanates used in the invention are aromatic derivatives which are liquids at room temperatures. Such materials are readily commercially available such as the isomers of toluenediisocyanate, diphenylmethane diisocyanate and methylene bridged polyphenylmethane polyisocyanates isophorane diisocyanate and hydrogenated derivatives of MDI. Many of the polyphenyl polymethylene polyisocyanates which are prepared by aniline formaldehyde condensations followed by phosgenation ("crude MDI") and polyisocyanates which contain carbodiimide groups, uretonimine groups, urethane groups, sulfonate groups, isocyanurate groups, urea groups or biuret groups. Derivatives containing small amounts of pre-reacted low molecular weight polyols such as butylene glycol and propylene glycol or hydroxy esters to form stable liquids are useful. Such combinations are readily available and well known in the urethane manufacturing art. Of particular interest to this invention are compositions containing the 2,4′ and 4,4′ diphenylmethane diisocyanate isomers which are quasi prepolymers containing 1—18% by weight or about 0.1—0.3 mol percent of polyols having a molecular weight of 75—700 and especially 75—200 such as propylene glycol, butylene, and poly-1,2-propylene ether glycols having a molecular weight of from 134 to 700. Of additional interest to the invention are carbodiimide uretonimine modified derivatives of diphenylmethane diisocyanates which have been further modified by the addition of high molecular weight polyols such as polyether diols and triols having a molecular weight of 1000—8000. In general the polyol modified isocyanate have a free —NCO content of 15—47% by weight and more often 20—30%.

Typical polyisocyanates for use in the invention are exemplified but not limited to the following:

"Polyisocyanate 1" is made by prereacting pure diphenylmethanediisocyanate with 10% by weight of a polyol mixture containing 19 parts 1,2 propylene glycol, 22 parts 2,3 butylene glycol and 59 parts tripropylene glycol and the resultant product having 23% by weight free isocyanate commercially available as Rubinate® 179 isocyanate from Rubicon Chem.

"Polyisocyanate 2" is uretonimine modified 4,4′ diphenylmethane diisocyanate having 29.3% free —NCO and a functionality of 2.1 which is further reacted with 1.3% by weight 1,3 butylene glycol to give a free isocyanate content of 27.4%.

"Polyisocyanate 3" is similar to "Polyisocyanate 1" made by reacting 18% by weight mixed polyols to a free isocyanate content of 15%.

"Polyisocyanate 4" is similar to "Polyisocyanate 2" made by reacting a uretonimine modified polyisocyanate having a free —NCO content of 31% further reacted with 1.3% by weight 1,2 propylene glycol to a free isocyanate content of 29.3%.

"Polyisocyanate 5" is similar to "Polyisocyanate 2" made by reacting 2% by weight of 1,2 propylene glycol to a free —NCO content of 27.4%.

"Polyisocyanate 6" is similar to "Polyisocyanate 2" made by prereacting with 2% by weight tripropylene glycol.

"Polyisocyanate 7" is similar to "Polyisocyanate 2" made by prereaction with 10% by weight of the polyol mixture described in "Polyisocyanate 1" to give an —NCO content of 20%.

"Polyisocyanate 8" is similar to "Polyisocyanate 7" using 5% by weight of the polyol mixture to give an —NCO content of 24.5%.

"Polyisocyanate 9" is similar to "Polyisocyanate 2" made by prereaction with 2% by weight 1,3 butylene glycol.

The silicone surfactants which are used are modified polydialkyl siloxane polymers especially polydimethyl-siloxanes. These materials are well known and readily commercially available in numerous modifications having side chains linked to the silicon atoms through linking groups composed of carbon and hydrogen; carbon, hydrogen and oxygen; carbon, hydrogen and sulfur; carbon, hydrogen and nitrogen; or carbon, hydrogen, oxygen and nitrogen. Those which are substantially free of isocyanate reactivity at temperatures below 25°C and which are completely or partly stable to moisture are preferred. For the most part these silicone surfactants are made by grafting on organic side chains which are substantially free of isocyanate reactivity

Silicone surfactants generally conform to the general formula:

$$(CH_3)_3Si[OSi(CH_3)_2]_x[OSiR^+CH_3]_y[OSiR^*CH_3]_zOSi(CH_3)_3$$

where the value of x, y or z vary from 10—1000 and where $R^+$ and $R^*$ may be the same or different and be selected from alkyl pendant radical such as polyalkyl ether or alkoxyether groups such as

$$-CH_2CHBO(CH_2-CHBO)_m-C_mH_{2m+1} \quad \text{or} \quad -OCH_2CHBO(CH_2CHBO)_m-C_nH_{2n+1}$$

where B is H, $-CH_3$, $-C_2H_5$ where the sum of m+n is such that the total formula weight of the polyoxyalkylene block and other grafted radicals ranges from 800—40,000, the polysiloxane block ranges from 15—70% of the molecular weight and n is 1—5; or grafted monovalent radicals selected from methoxy, ethoxy, ethylene, styrene, trifluoropropene, allyltetrahydro-furfuryl ether, allyloxyethyl acetate, acrolein diethylacetal, allylcyanide, allyloxyethyl cyanide, allylmorpholine, allyl-chloride and others.

Surfactant of particular interest for use in the invention are polydimethylsiloxane-poly (polyethylene oxide/polypropylene oxide) block copolymers having the general formula:

$$Me_3SiO(Me_2SiO)_x[Z'-O(CHMeCH_2O)_m(C_2H_4O)_n-Z-Si(Me)O]_ySiMe_3$$

where Me=$CH_3$, x is 42—125; y is 3—15; m is 15—30; n is 10—30; and Z' is alkyl, aryl or an aralkyl radical and most often methyl; and Z is an alkylene, arylene or an aralkylene radical and most often propylene or ethylene. Preparation and use of these materials are described in U.S. Patents 3,505,377; 3,703,489; 3,980,688; and 4,071,483. Similar compositions wherein the divalent Z radical is linked to silicon through an oxygen, carbonyl, acetyl, sulfur, nitrogen or carbo nitrogen group are also included.

Non-hydrolyzable surfactants are usually prepared by the platinum catalyzed addition reaction of a siloxane containing silanic hydrogens with a polyether whose chain is end blocked at one end by an alkenyloxy group (e.g., allyloxy) and at the other end by an alkoxy, aryloxy, or aralkyloxy group. Surfactants having a viscosity of at least 50 mPa.s are operable and have molecular weights of 300—100,000.

Illustrative of silicone polyethylene oxide/polypropylene oxide block surfactants for use in the invention are the following:

"Silicone Surfactant A" is a polydimethylsiloxane/oxygen linked alkyl terminated polyethylene oxide/polypropylene oxide copolymer having a specific gravity of 1.03 and a viscosity of 1100 mPa.s at 25°C commercially available by Union Carbide as L550.

"Silicone Surfactant B" is a nonhydrolyzable polydimethylsiloxane—carbon linked alkyl terminated polyethylene oxide/polypropylene oxide copolymer having a specific gravity of 1.03 and viscosity of 1200 mPa.s at 25°C commercially available by Union Carbide as L540.

"Silicone Surfactant C" is a nonhydrolyzable polydimethylsiloxane—alkyl terminated polyethylene oxide/polypropylene oxide copolymer having a specific gravity of 1.03 and a viscosity of 1000—1500 mPa.s commercially available by Union Carbide as L560.

"Silicone Surfactant D" is a nonhydrolyzable surfactant similar to L560 having a specific gravity of 1.03 and a viscosity of 100—1500 mPa.s commercially available by Union Carbide as L-5304.

"Silicone Surfactant E" is a polydimethyl siloxane, polyether copolymer having a specific gravity of 1.035 and viscosity of 1000—1500 mPa.s and commercially available by Dow Corning as DC-190.

"Silicone Surfactant F" is a polydimethyl siloxane polyether copolymer available from B. F. Goldschmidt as BF-2270 having a viscosity of 1400 mPa.s.

"Silicone Surfactant G" is a polydimethyl siloxane polyether copolymer available commercially by General Electric as SF1188.

Returning now to the reaction injection molding process of the invention, there is normally present a catalyst for the reaction of isocyanate with the other reactive species, and this is usually added to the polyol or polyamine component.

Any known catalyst useful in producing polyurethanes may be employed. Representative catalysts includes (a) tertiary amines such as (dimethylaminoethyl) ether, tri-ethylamine, tri-methylamine and N,N-dimethylethanolamine; (b) tertiary phosphenes; (c) strong bases such as alkali or alkaline earth metal hydroxides and alkoxides; (d) acidic metal salts of strong acids such as ferric chloride, stannic chloride and bismuth nitrite; (e) chelates of various metal such as those which can be obtained from acetylacetone, benzylacetone, salisyl aldehydeamine and the like with various metals such as zinc, titanium, tin, iron and molybdenum; (f) alcoholates of titanium, tin and aluminum; (g) salts of organic acids with a variety of metal such as alkali metals, alkaline earth metals, aluminum tin, lead, magnanese, cobalt, nickel, and copper including for example, sodium acetate, stannus oleate, and manganese and cobalt naphthanate; (h) organo metallic derivatives of tetravalent tin, trivalent and penta-valent arsenic, antimony and bismuth. Among such derivatives are most commonly used the dialkyltin salts of carboxylic acids such as dibutyltindiacetate and dibutyltindilaurate.

The tertiary amines may be used as primary catalyst for accelerating the reactive hydrogen/isocyanate reaction or as secondary catalyst in combination with one or more of the above noted metal catalyst. Metal catalyst or combination of metal catalyst may also be employed as the accelerating agents without the use of the amines. Catalysts are employed in small amounts for example, from about 0.001 percent to about 5 percent based on the weight of the reaction mixture.

In addition the reacted components may contain minor amounts of chain extenders selected from high and low molecular weights of polyamines, such as diethyltoluene diamine, thiols, and low molecular weight glycol such as ethylene glycol, butane diol, propylene glycol, and glycerine.

It may be advantageous in some instances to reduce the specific gravity of the polyurethane products by the incorporation therewith of non-reactive gases such as nitrogen, air, carbon-dioxide, and the

chlorofluoromethane and ethane derivatives in concentrations ranging from 1—2 percent by volume. Such gases are incorporated with polyol employing conventional mechanical mixing procedures.

The invention is illustrated by the following Examples in which parts are by weight. Specific components referred to in the text above are named in the examples by the reference used in the text, as follows:—

| | | |
|---|---|---|
| Polysiloxane mold release agent | : | "Polysiloxane I to XI" |
| Polyol/polyamine | : | "Polyol A to N" and "Polyamine O and P" |
| Polyisocyanate | : | "Polyisocyanate 1 to 9" |
| Silicone surfactant | : | "Silicone surfactant A to G". |

Examples 1 to 28 describe isocyanate compositions containing siloxane mold release agent and silicone surfactant.

Examples 29 to 38 show the improvement in mold release using the RIM process of the invention with, for comparison, a text ("control") using an isocyanate and no internal mold release composition.

Example 1

100 Parts liquid diphenylmethane diisocyanate quasi-prepolymer containing 10% low molecular weight glycols (Rubinate° LF-179, Rubicon Inc.) was mixed with 0.1 parts polydimethylsiloxane-polyoxypropylene/polyoxyethylene block (Silicon Surfactant D) copolymer. To this liquid was added 1 part of "Polysiloxane I". The mold release agent was added to the surfactant containing polyisocyanate liquid under high shear mixing with a Cowles high speed mixer rotating at 2430 rpm. High speed mixing is employed to obtain a fine stable dispersion. The dispersion remained stable until used in molding operations. Similar comvositions made without the silicone surfactant start to gel in less than 25 hours and were not suitable for further use.

Similar compositions made according to the procedure of Example 1 are listed in Table 1.

TABLE 1

| Example No. | Mold release agent polysiloxane type/parts | Silicone surfactant type/parts | Polyiso-cyanate type (100 parts) | Stability 20—25°C (days) |
|---|---|---|---|---|
| 1 | I/1.0 | B/0.1 | 1 | >180 |
| 2 | I/3.0 | B/0.33 | 1 | >180 |
| 3 | I/3.0 | B/0.15 | 1 | >180 |
| 4 | I/6.0 | B/0.66 | 1 | >180 |
| 5 | I/6.0 | B/0.3 | 1 | >180 |
| 6 | I/12.0 | B/0.66 | 1 | >180 |
| 7 | I/15.0 | B/0.23 | 1 | >180 |
| 8 | I/6.0 | C/0.66 | 1 | >180 |
| 9 | I/6.0 | E/0.66 | 1 | >180 |
| 10 | V/6.0 | B/0.66 | 1 | >10 |
| 11 | IV/6.0 | B/0.66 | 1 | >10 |
| 12 | IX/6.0 | B/0.66 | 1 | >10 |
| 13 | I/5.0 | F/0.8 | 5 | >10 |
| 14 | I/5.0 | E/0.8 | 5 | >30 |
| 15 | I/5.0 | D/0.8 | 5 | >30 |
| 16 | I/5.0 | G/0.8 | 5 | >30 |
| 17 | I/5.0 | B/0.8 | 5 | >30 |
| 18 | I/5.0 | C/0.8 | 5 | >30 |
| 19 | I/5.0 | A/0.52 | 5 | >30 |
| 20 | I/5.0 | B/0.66, A/0.13 | 5 | >30 |
| 21 | I/5.0 | C/0.56 | 2 | >180 |
| 22 | I/5.0 | C/0.56 | 9 | >180 |
| 23 | I/5.0 | C/0.56 | 6 | >180 |
| 24 | III/4.5 | C/0.56 | 5 | >180 |
| 25 | IV/4.5 | C/0.56 | 5 | >180 |
| 26 | IX/4.5 | C/0.56 | 5 | >180 |
| 27 | I/6.0 | B/0.66 | 7 | >180 |
| 28 | I/6.0 | B/0.66 | 8 | >180 |

Indications of improved mold release are provided by laboratory techniques wherein 4 mm thick 2.54 cms×15 cms strips of conventional polyurethane RIM formulations are cast on a clean steel surface cured at 48°C for one minute then peeled off with a metal clip attached to a spring balance. Coatings containing no mold release have release values of ranging from 32—44 kg/m while typical RIM formulations containing from 0.5—5% by weight of the mold release agents of the invention have mold release values substantially lower. For example a RIM urethane formulation containing the blend of Example 1 gives mold release values of 8—12 kg/m. While the laboratory peel strength is a good indication of the effectiveness of internal mold release agents their true worth can only be determined in actual commercial scale use in formulations employed in making complicated three dimensional shapes where large cured moldings must be pulled off directly from the mold surface. In the following example the use of the internal mold release blends of the invention in commercial scale RIM application is best demonstrated.

The following examples were run on a standard two component Cinncinati Milacron RIM 90 machine equipped with a heated metal mold for forming an automobile fascia having a surface area of at about 2 sq. meters and 3.68 kilograms in weight. All proportions are expressed in parts by weight unless otherwise specified.

General procedure

The polyurethane compositon used represent typical RIM two component systems where the "A" component is a composition selected from Table 1. The "B" component is a mixture of a polyether polymer polyol such as (Niax D440) with a chain extender such as ethylene glycol and dibutyl tin dilaurate (Catalyst T-12—M and T Corp.) as the catalyst.

The temperature of the "A" component is maintained at 26°C and the "B" component at 44°C.

The polyol or "B" component is nucleated with nitrogen under pressure to result in a molded density of 1.05 kg/cm$^3$.

The surface of the mold is pretreated with a conventional external mold release wax, XMR-136, supplied by Chem-Trend, Inc. The mold temperature is maintained at 68°C.

Components "A" and "B" are blended in an impingement mixer and dispensed directly into the mold, the cure time is 60 seconds. The mold is then opened and the molding removed. There must be no surface sticking or tearing of the polyurethane, the part should release without the need for undue force.

Example 29—38

According to the previously described general procedure a series of automobile fascias were made employing various "A" Components which are isocyanate dispersions of polysiloxanes and silicon surfactants. The "A" component of the invention were impingement mixed with typical "B" Components which are polyol blends containing catalysts and in some formulations, fillers at "A Component/B Component" ratios to provide an isocyanate index of 103—105 with a mold temperature of 68°C with one coating of external mold release.

| "B components" | Parts by weight | | | | | | |
|---|---|---|---|---|---|---|---|
| | B-1 | B-2 | B-3 | B-4 | B-5 | B-6 | B-7 |
| Dow Corning Polyol XAS-10771 | 100 | 100 | | | | | |
| Union Carbide Polyol-Niax D442 | | | 81 | 53.66 | 89 | 69 | |
| Union Carbide Polyol-Niax W136 | | | | | | | 100 |
| Ethylene glycol | 16 | 16 | 19 | 12.6 | 11 | 8 | |
| Diethyltoluene diamine | | | | | | | 22.5 |
| Dibutyl Tin Dilaurate | .09 | .09 | 00.1 | .07 | .1 | .08 | .15 |
| DABCO-DC-2 Catalyst | .09 | | 00.1 | .07 | .1 | | |
| Catalyst UL28 | | .09 | | | | | |
| Flaked Glass | | | | 337 | | | |
| Milled Glass | | 28.9 | | | | 23 | |

The number of molding made from various "A" Component Isocyanate Dispersions from Table 1 are listed in the following Table 2. A cure time of 60 seconds was permitted before mold was opened.

TABLE 2

| Example No. | "A" Component isocyanate dispersion of Exmple No. | "B" Component | Isocy-anate index | Ratio "A"/"B" | Number of release before sticking |
|---|---|---|---|---|---|
| Control | "Polyisocyanate 2" | B-1 | 103 | 0.744 | 5 |
| 29 | 20 | B-1 | 103 | 0.871 | >30 |
| 30 | 19 | B-2 | 103 | 0.66 | >30 |
| 31 | 20 | B-3 | 105 | 1.08 | >30 |
| 32 | 20 | B-5 | 104 | 0.627 | >25 |
| 33 | 20 | B-6 | 104 | 0.487 | >25 |
| 34 | 20 | B-5 | 103 | 0.667 | >25 |
| 35 | 20 | B-4 | 105 | 0.687 | >30 |
| 36 | 3 | B-7 | 105 | 0.534 | 12 |
| 37 | 7 | B-7 | 106 | 0.55 | 14 |
| 38 | 2 | B-7 | 103 | .5 | 10 |

**Claims**

1. A liquid organic polyisocyanate composition for use in a process for manufacturing shaped polymer components by a reaction injection process (RIM) wherein a liquid stream of polyisocyanate is impingement mixed with at least one stream containing reactants selected from polyols, polyamines and catalysts, characterized in that said polyisocyanate composition has dispersed therein:—

from 1—15 percent by weight of a polysiloxane mold release agent which consists essentially of 0.5—20 mol percent of

$$R_aR'_bSiO_{[4-(a+b)]/2} \text{ units}$$

and from 80—99.5 mol percent of

$$R''_cSiO_{(4-c)/2} \text{ units,}$$

where R is an isocyanate reactive organic radical selected from alcohols, phenols, thiols, primary or secondary aromatic amines, which contain no oxygen, and not more than one nitrogen, atoms attached directly to, in conjugation with, or incorporated within, the aromatic ring nucleus, and secondary aliphatic amines wherein at least one of the alkyl carbon atoms, bonded directly to the nitrogen atom, is not a primary atom and carboxylic acids, a has an average value of from 1—3,

R' and R'' are both non-isocyanate reactive organic radicals,

b has an average value of 0—2,

a+b is from 1—3,

and c has an average value of from 1—3,

whereas the ratio of the total molecular weight to the total number of isocyanate reactive functional groups in the molecule ranges from 100—3500 the combined formula weights of all isocyanate reactive organic radicals, R do not exceed 40% of the total molecular weight of said polysiloxane mold release agent,

the comined formula weights of all non-isocyanate reactive radicals, R'+R'' together do not exceed 40% of the total molecular weight of said polysiloxane mold release additive,

the combined formula weights of all the organic radicals R+R'+R'' in the molecule together do not exceed 60% of the total molecular weight of the molecule,

said polysiloxane mold release agent contains an average of at least two isocyanate reactive functional groups per molecule,

at least two of the isocyanate reactive functional groups in each molecule are located on separate organic radicals, R, attached independently to different silicon atoms in said polysiloxane, the molecular weight of said polysiloxane mold release agent ranges from 1000 to 30,000, and whereas said polysiloxane mold release agent is substantially insoluble in said liquid polyisocyanate,

and from 1—25 percent based on the weight of said polysiloxane mold release agent of a liquid silicone surfactant which is substantially free of isocyanate reactive groups.

2. A composition according to Claim 1, wherein said silicone surfactant has the general formula:

$$(CH_3)_3Si[OSi(CH_3)_2]_x[OSiR^+CH_3]_y[OSiR^*CH_3]_zOSi(CH_3)_3$$

where the value of x, y or z vary from 10—1000, $R^+$ and $R^*$ may be the same or different and are selected from polyalkyl ether and alkoxyether groups, the sum of the total formula weight for $R^+$ and $R^*$ ranges from 800—40,000 and the polysiloxane block ranges from 15—70% of the molecular weight.

3. A composition according to Claim 1 or 2, wherein R is

$$—CH_2CH_2CH_2O—[CH_2CH(CH_3)O]_n—H,$$

where n=1—5.

4. A composition according to any one of the preceding claims wherein the polysiloxane release agent has a hydroxyl equivalent weight between 500 and 2000.

**Patentansprüche**

1. Flüssige organische Polyisocyanatmischung für die Verwendung bei einem Verfahren zur Herstellung von Polymer-Formteilen durch ein Reaktionsspritzguß-Verfahren (RIM-Verfahren), bei dem ein flüssiger Strom von Polyisocyanat unter Aufprall mit wenigstens einem Strom vermischt wird, der aus Polyolen, Polyaminen und Katalysatoren ausgewählte Reaktionsteilnehmer enthält, dadurch gekennzeichnet, daß in der Polyisocyanatmischung

1 bis 15 Masseprozent eines Polysiloxan-Entformungsmittels, das im wesentlichen aus 0,5 bis 20 Molprozent

$$R_aR'_bSiO_{[4-(a+b)]/2}\text{-Einheiten}$$

und 80 bis 99,5 Molprozent

$$R''_cSiO_{(4-c)/2}\text{-Einheiten}$$

besteht, worin

R eine isocyanatreaktive organische Gruppe ist, die aus Alkoholen, Phenolen, Thiolen, primären oder sekundären aromatischen Aminen, die kein Sauerstoff- und nicht mehr als ein Stickstoffatom enthalten, das direkt an den aromatischen Kern gebunden oder in Konjugation mit dem aromatischen Kern gebunden oder in den aromatischen Kern eingebaut ist, und sekundären aliphatischen Aminen, bei denen wenigstens eines der direkt an das Stickstoffatom gebundenen Alkyl-Kohlenstoffatome kein primäres Atom ist, und Carbonsäuren ausgewählt ist;

a einen Durchschnittswert von 1 bis 3 hat;

R' und R'' beide nicht isocyanatreaktive organische Gruppen sind;

b einen Durchschnittswert von 0 bis 2 hat;

a+b 1 bis 3 beträgt und

c einen Durchschnittswert von 1 bis 3 hat;

während

das Verhältnis des gesamten Molekulargewichts zu der Gesamtzahl der isocyanatreaktiven funktionellen Gruppen in dem Molekül 100 bis 3500 beträgt;

die Summe der Formelmassen aller isocyanatreaktiven organischen Gruppen R 40% des gesamten Molekulargewichts des Polysiloxan-Entformungsmittels nicht überschreitet;

die Summe der Formelmassen aller nicht isocyanatreaktiven Gruppen R'+R'' zusammen 40% des gesamten Molekulargewichts des Polysiloxan-Entformungszusatzes nicht überschreitet;

die Summe der Formelmassen aller organischen Gruppen R+R'+R'' in dem Molekül zusammen 60% des gesamten Molekulargewichts des Moleküls nicht überschreitet;

das Polysiloxan-Entformungsmittel je Molekül durchschnittlich wenigstens zwei isocyanatreaktive funktionelle Gruppen enthält;

sich wenigstens zwei der isocyanatreaktiven funktionellen Gruppen in jedem Molekül an getrennten organischen Gruppen R befinden, die unabhängig an verschiedene Siliciumatome in dem Polysiloxan gebunden sind;

das Molekulargewicht des Polysiloxan-Entformungsmittels in dem Bereich von 1000 bis 30.000 liegt und

das Polysiloxan-Entformungsmittel in dem flüssigen Polyisocyanat im wesentlichen unlöslich ist,

und 1 bis 25 Masseprozent, bezogen auf die Masse des Polysiloxan-Entformungsmittels, eines flüssigen, oberflächenaktiven Silicons, das von isocyanatreaktiven Gruppen im wesentlichen frei ist, dispergiert sind.

2. Mischung nach Anspruch 1, bei der das oberflächenaktive Silicon die allgemeine Formel:

$$(CH_3)_3Si[OSi(CH_3)_2]_x[OSiR^+CH_3]_y[OSiR^*CH_3]_zOSi(CH_3)_3$$

hat, worin der Wert von x, y oder z von 10 bis 1000 variiert $R^+$ und $R^*$ gleich oder verschieden sein können und aus Polyalkylether- und Alkoxyethergruppen ausgewählt sind, die Summe der gesamten Formelmasse für $R^+$ und $R^*$ 800 bis 40.000 beträgt und der Polysiloxanblock 15 bis 70% des Molekulargewichts beträgt.

3. Mischung nach Anspruch 1 oder 2, bei der R

$$—CH_2CH_2CH_2O—[CH_2CH(CH_3)O]_n—H$$

iste, worin n=1 bis 5.

4. Mischung nach einem der vorhergehenden Ansprüche, bei der das Polysiloxan-Entformungsmittel eine Hydroxyl-Äquivalentmasse zwischen 500 und 2000 hat.

**Revendications**

1. Composition de polyisocyanate organique liquide à utiliser dans un procéde de fabrication de composants en polymère façonné par un procédé de moulage par injection par réaction (MIR), dans lequel un courant liquide de polyisocyanate est mélangé par impact avec au moins un courant contenant des réactants choisis parmi les polyols, les polyamines et les catalyseurs, caractérisé en ce que la composition de polyisocyanate contient en dispersion:

1 à 15% en poids d'un polysiloxane de démoulage qui consiste essentiellement en 0,5 à 20 moles % d'unités

$$R_aR'_bSiO_{[4-(a+b)]/2}$$

et en 80 à 99,5 moles % d'unités

$$R''_cSiO_{(4-c)/2}$$

où R est un radical organique réactif avec les isocyanates choisis parmi les alcools, les phénols, les thiols, les amines aromatiques primaires et secondaires qui ne contiennent pas d'atome d'oxygène ni plus d'un atome d'azote unis directement à ou en conjugaison avec ou incorporés dans le noyau aromatique cyclique, et les amines aliphatiques secondaires dans lesquelles au moins l'un des atomes de carbone alcoyliques unis directement à l'atome d'azote n'est pas un atome primaire, et les acides carboxyliques,

a a une valeur moyenne de 1—3,

R' et R'' sont tous deux des radicaux organiques ne réagissant pas avec les isocyanates,

b a une valeur moyenne de 0—2,

a+b vaut 1—3, et

c a une valeur moyenne de 1—3,

tandis que le rapport du poids moléculaire total au nombre total de radicaux fonctionnels réactifs avec les isocyanates dans la molécule s'échelonne de 100 à 3500, les poids de formule cumulés de tous les radicaux organiques réactifs avec les isocyanates, R, n'excèdent pas 40% du poids moléculaire total du polysiloxane de démoulage,

les poids de formule cumulés de tous les radicaux non réactifs avec les isocyanates, R'+R'', n'excèdent ensemble pas 40% du poids moléculaire total du polysiloxane de démoulage,

les poids de formule cumulés de tous les radicaux organiques R+R'+R'' dans la molécule n'excèdent ensemble pas 60% du poids moléculaire total de la molécule,

le polysiloxane de démoulage contient en moyenne au moins deux radicaux fonctionnels réactifs avec les isocyanates par molécule,

au moins deux des radicaux fonctionnels réactifs avec les isocyanates de chaque molécule sont situés sur des radicaux organiques distincts, R, unis indépendamment à des atomes de silicium différents du polysiloxane,

le poids moléculaire de polysiloxane de démoulage s'échelonne de 1000 à 30.000 et il est entendu que le polysiloxane de démoulage est sensiblement insoluble dans le polyisocyanate liquide,

et 1 à 25%, sur la base du poids du polysiloxane de démoulage, d'un silicone liquide tensio-actif qui est sensiblement exempt de radicaux réactifs avec les isocyanates.

2. Composition suivant la revendication 1, dans laquelle le silicone tensio-actif est de la formule générale:

$$(CH_3)_3Si—[OSi(CH_3)_2]_x—[OSiR^+CH_3]_y—[OSiR^*CH_3]_z—OSi(CH_3)_3$$

où la valeur de x, y ou z varie de 10 à 1000, $R^+$ et $R^*$ qui peuvent être identiques ou différents peuvent être choisis parmi les radicaux polyalcoyl-éther et -alcoxyéther, la somme du poids de formule total pour $R^+$ et $R^*$ est de 800 à 40.000 et le bloc de polysiloxane forme 15 à 70% du poids moléculaire.

3. Composition suivant la revendication 1 ou 2, dans laquelle R est

$$-CH_2CH_2CH_2O(CH_2CH(CH_3)O)_nH$$

où n=1 à 5.

4. Composition suivant l'une quelconque des revendications précédentes, dans laquelle le polysiloxane de démoulage a un poids équivalent d'hydroxyle entre 500 et 2000.